# EUROPÄISCHE PATENTSCHRIFT

(11) **EP 3 399 292 B1**
(45) Veröffentlichungstag und Bekanntmachung des Hinweises auf die Patenterteilung: **29.04.2020**
(21) Anmeldenummer: 18169303.7
(22) Anmeldetag: 25.04.2018
(51) Int. Cl.: G01L 1/20, G01L 1/22

(54) **MEHRSCHICHTIGER, TAKTILER SENSOR**
MULTILAYER TACTILE SENSOR
CAPTEUR TACTILE MULTICOUCHE

(30) Priorität: 03.05.2017 DE 102017109487
(43) Veröffentlichungstag der Anmeldung: 07.11.2018
(73) Patentinhaber: Pilz GmbH & Co. KG, 73760 Ostfildern (DE)
(72) Erfinder: Ibrocevic, Onedin, 73760 Ostfildern (DE); Kuczera, Matthias, 73760 Ostfildern (DE); Schweiker, Matthias, 73760 Ostfildern (DE)
(74) Vertreter: Witte, Weller & Partner Patentanwälte mbB

(56) Entgegenhaltungen:
- DE-A1- 3 406 093
- DE-A1-102010 034 717
- US-A1- 2014 331 412

## Beschreibung

Die vorliegende Erfindung betrifft eine Sensoranordnung mit einer ersten, zweiten und dritten Schicht aus flexiblem Material. Die Schichten bilden übereinandergelegt einen druckempfindlichen Sensor mit mindestens zwei Sensorzellen.

Ein solcher Sensor ist beispielsweise aus der DE 10 2015 120 368 B3 bekannt.

Gattungsmäßige mehrschichtige Sensoren zeichnen sich dadurch aus, dass sie mindestens eine Schicht aus einem druckempfindlichen Material aufweisen, welches bei lokaler mechanischer Belastung seinen elektrischen Durchgangswiderstand im Ort der Belastung ändert. Elektroden oberhalb und unterhalb der druckempfindlichen Schicht erfassen die Widerstandsänderung und ermöglichen so eine Bestimmung des Ortes und der Stärke einer Druckbelastung auf die Sensoranordnung. Auf diese Weise lassen sich flexible, flächige Sensoren erstellen, die in Trittmatten oder Eingabegeräten verwendet werden können.

Das grundlegende Prinzip solcher taktilen Sensoren ist in der GB 2 115 555 A beschrieben. GB 2 115 555 A offenbart einen taktilen Sensor, bei dem die druckempfindliche Schicht in Form einer elastischen Matte ausgebildet ist. Die Matte kann ein textiler Web- oder Filzstoff sein, der mit einem kohlenstoffartigen oder einem metallischen Additiv durchsetzt ist, wodurch die Matte insgesamt leitfähig wird. Die leitfähig gemachten Fasern der Matte wirken bei einer Druckbelastung auf die Matte zusammen, so dass sich im Ort der Druckbelastung ein Durchgangswiderstand durch die Matte verändert. Um den veränderlichen Durchgangswiderstand zu messen, sind gemäß der GB 2 115 555 A streifenförmige Elektroden matrixartig oberhalb und unterhalb der Matte angeordnet und mit einer elektrischen Schaltung gekoppelt. Die Elektroden sind beispielsweise metallische Folien oder mit Metall versetzte Silikone. Über eine an einer oberen und einer unteren Elektrode angelegten Spannung, kann der elektrische Widerstand im Überlappungsbereich der jeweiligen Elektroden bestimmt werden und somit der Durchgangswiderstand der elastischen Matte an diesem Ort. Der gemessene Durchgangswiderstand lässt wiederum Rückschlüsse auf die jeweilige Druckbelastung an dieser Stelle zu. Indem nacheinander jeweils der Widerstand zwischen einer oberen und einer unteren Elektrode bestimmt wird, kann eine Druckverteilung über die elastische Matte bestimmt werden.

Das Messprinzip beruht somit darauf, den veränderlichen Durchgangswiderstand der druckempfindlichen Schicht zu bestimmen, um eine Druckverteilung zu ermitteln. Maßgeblich für die Eigenschaften des Sensors ist somit die Beschaffenheit des druckempfindlichen, elektrisch leitfähigen Materials und dessen Fähigkeit seinen Durchgangswiderstand zu ändern. Bei einer sehr dünnen Schicht kann es vorkommen, dass eine Änderung des Durchgangswiderstands durch eine Druckbelastung nur gering ist und somit großflächige Elektroden nötig sind, um eine Änderung des Durchgangswiderstands erfassen zu können. Die Größe einer Sensorzelle, die durch die Überlappungsbereiche der Elektroden bestimmt wird, ist somit direkt abhängig von der Schichtendicke der druckempfindlichen Schicht, wodurch unmittelbar das Auflösungsvermögen eines Sensors mit vielen Sensorzellen unvorteilhaft beschränkt wird.

Ein weiterer Nachteil ist, dass sehr eng beieinanderliegende Sensorzellen, sich gegenseitig beeinflussen können, indem sich der veränderliche Durchgangswiderstand im Bereich einer Zelle auf die benachbarte Zelle auswirkt. Benachbarte Sensorzellen müssen daher, um diesen Effekt zu minimieren, weiter voneinander beabstandet werden, wodurch tote Bereich zwischen den Sensorzellen entstehen, in denen keine effektive Erkennung der Druckbelastung erfolgen kann.

DE 10 2007 022 871 A1 greift diese Probleme auf und schlägt vor, die druckempfindliche, leitfähige Schicht zumindest partiell zu unterbrechen, um zwei benachbarte Zellen elektrisch voneinander zu entkoppeln. In einem ersten Ausführungsbeispiel offenbart DE 10 2007 022 871 A1 hierfür einen Sensor, bei dem die druckempfindliche, leitfähige Schicht in einzelne Pads aufgeteilt ist, die je an Kreuzungspunkten zweier Elektroden platziert sind und im Übrigen durch Luft oder einem anderen Medium, welches einen größeren elektrischen Widerstand hat, voneinander beabstandet sind. Auf diese Weise sind die einzelnen Zellen elektrisch vollständig voneinander entkoppelt, jedoch bilden auch hier die Bereiche, in denen die Entkopplung erfolgt, Abschnitte, in denen eine Druckbelastung effektiv nicht erkannt werden kann.

In einem zweiten Ausführungsbeispiel offenbart DE 10 2007 022 871 A1 alternativ, die druckempfindliche, leitfähige Schicht durchgängig zu gestalten, wobei jedoch einzelne Bereiche der druckempfindlichen, leitfähigen Schicht so bearbeitet werden, beispielsweise indem Stücke herausgeschnitten oder gefräst werden, dass zwischen zwei benachbarten Sensorzellen Stege gebildet werden, die zwei benachbarte Sensorzellen elektrisch voneinander entkoppeln. Die druckempfindliche, leitfähige Schicht bleibt so zusammenhängend, bedarf aber einer entsprechenden Bearbeitung, um die Stege in Form von hochohmigen Brücken zu bilden.

Jede der in DE 10 2007 022 871 A1 beschriebenen Varianten setzt somit voraus, dass die druckempfindliche, leitfähige Schicht bearbeitet und angepasst werden muss, entweder indem diese in einzelne Komponenten aufgeteilt wird oder indem Bereiche zu hochohmigen Brücken gewandelt werden. Beides macht den Gesamtaufbau des Sensors aufwendig und teuer. Darüber hinaus sind weiterhin Einschränkungen in Bezug auf Auflösung bzw. tote Bereiche, in denen der Sensor effektiv keine Druckbelastung erfassen kann, hinzunehmen.

US 2014/0331412 A1 zeigt eine Sensoreinrichtung mit einer Kraftmessanordnung, die mehrere Materialschichten umfasst. Die Kraftmessanordnung umfasst eine Vielzahl von Kraftsensoren, die dort definiert sind, wo sich ein Reihenleiter und ein Spaltenleiter auf gegenüberliegenden Seiten eines Kraftmessmaterials, beispielsweise eines piezoresistiven Materials, nähern. Um das elektrische Übersprechen zwischen den mehreren Sensoren zu reduzieren, ist neben dem Kraftmessmaterial ein Halbleitermaterial enthalten, um einen PN-Übergang mit dem Kraftmessmaterial zu erzeugen. Dieser PN-Übergang wirkt als Diode, wodurch der Stromfluss im Wesentlichen in eine Richtung begrenzt wird, was wiederum das Übersprechen zwischen den mehreren Sensoren reduziert.

Es ist eine Aufgabe der vorliegenden Erfindung, einen taktilen Sensor anzugeben, mit dem sich eine ortsabhängige Druckverteilung präzise bestimmen lässt und der die vorstehend genannten Nachteile vermeidet. Insbesondere ist ein Sensor anzugeben, der besonders flach und flexibel ausgebildet ist, eine hohe Auflösung ermöglicht und nur wenige tote Bereiche aufweist, in denen eine effektive Bestimmung der Druckbelastung nicht erfolgen kann.

Gemäß einem Aspekt der vorliegenden Erfindung wird diese Aufgabe gelöst durch eine Sensoranordnung gemäß der unabhängigen Ansprüche. Weitere Ausführungsbeispiele sind in den abhängigen Ansprüchen gezeigt.

Es ist somit eine Idee der vorliegenden Erfindung, eine Druckbelastung des Sensors nicht aufgrund des veränderlichen Durchgangswiderstands einer Schicht zu bestimmen, sondern anhand des elektrischen Widerstands, der sich aus dem Durchgangswiderstand und einem Übergangswiderstand, der sich aus dem Zusammenwirken der druckempfindlichen Schicht und den Schichten, in welchen die Elektroden ausgebildet sind, ergibt. Maßgeblich für die Erfassung der Druckbelastung ist somit neben dem Durchgangswiderstand insbesondere der Übergangswiderstand zwischen den Schichten. Es hat sich gezeigt, dass so schon ein geringer Druck auf die Sensorzelle zu einer messbaren Änderung des elektrischen Widerstands führt, wodurch druckempfindlichere Sensoren erstellt werden können.

Eine Sensorzelle umfasst somit nicht nur das elektrisch leitfähige Material und eine Verbindung zu einer Elektrode, sondern vielmehr sind die Elektroden selbst ein Teil der Sensorzelle und tragen maßgeblich zu deren elektrischen Charakter bei. Dies wird dadurch erreicht, dass die Schichten, in denen die Elektroden ausgebildet sind, gleichartig zu der Zwischenschicht ausgebildet sind, und damit vorzugweise ebenfalls druckempfindlich und elastisch sind.

Indem primär auf den Effekt des veränderlichen Übergangswiderstands abgestellt wird, kann zudem die Abhängigkeit der Sensorgeometrie von dem druckempfindlichen Material verringert werden. Insbesondere wird der Effekt des Übersprechens von einer Sensorzelle zu einer anderen Sensorzelle vorteilhaft minimiert, da nunmehr nicht der Durchgangswiderstand des druckempfindlichen Materials ausschlaggebend ist, sondern vielmehr das Zusammenspiel der druckempfindlichen Schicht mit den darüber oder darunterliegenden Schichten, in denen die Elektroden ausgebildet sind. Indem die Elektroden nicht nur zum Kontaktieren der Sensorzellen verwendet werden, sondern zusätzlich auch maßgeblich zu deren elektrischen Charakter beitragen, werden benachbarte Zellen durch die Isolierung zwischen den Elektroden voneinander vorteilhaft entkoppelt.

Erfindungsgemäß sind die einzelnen Schichten des Sensors, so miteinander fixiert, dass die Fixierung den druckempfindlichen Übergangswiderstand nicht beeinflusst. Dies ermöglicht es, dass für die Druckbestimmung vorteilhaft maßgeblich auf den veränderlichen Übergangswiderstand abgestellt werden kann. Die Fixierung der Schichten zueinander erfolgt hierfür außerhalb einer aktiven Fläche der Sensorzelle, so dass kein oder zumindest nur ein sehr geringer Druck durch die Fixierung auf die Zellen ausgeübt wird. Damit die Elektroden dennoch in Position gehalten werden, sind die Elektroden des Sensors als elektrische Bereiche einer zusammenhängenden Schicht ausgebildet und über einen nichtleitenden Bereich miteinander mechanisch verbunden. Die zusammenhängende Schicht und die mechanische Verbindung ermöglichen eine Fixierung der Elektroden in Bezug auf die druckempfindliche Schicht in dem nichtleitenden Bereich, also außerhalb des aktiven Bereichs der Sensorzellen, so dass die Elektroden durch die Fixierung nicht auf das darunterliegende druckempfindliche Material gepresst werden.

Die Fixierung ist zudem so ausgebildet, dass die einander zugewandten Oberflächen der ersten und dritten Schicht im Wesentlichen frei von einer Fixierung sind, also insbesondere keinen Klebstoff oder andere Bindemittel auf den besagten Oberflächen im aktiven Bereich einer Zelle aufweist, die den veränderlichen Übergangswiderstand beeinflussen können. Diese Ausgestaltung bewirkt somit das Gegenteil von dem, was in der eingangs genannten DE 10 2007 022 871 A1 beschrieben ist, wonach die Elektroden entweder durch Kleben oder Pressen an der druckempfindlichen Schicht befestigt werden, um eine definierte Kontaktfläche zwischen diesen zu erreichen und auf diese Weise einen veränderlichen Übergangswiderstand zu minimieren. Das heißt, im Gegensatz zu einem Sensor gemäß DE 2007 022 871 A1, bei dem der veränderliche Übergangswiderstand gerade "ausgeklammert" werden soll, soll gemäß der vorliegenden Erfindung bei der Bestimmung der Druckverteilung maßgeblich auf diesen abgestellt werden, was durch die erfindungsgemäße Fixierung erreicht wird.

Bei einem erfindungsgemäßen Sensor wird die Druckverteilung maßgeblich aufgrund des veränderlichen Übergangswiderstands bestimmt, wobei die Fixierung dazu beiträgt, dass sich dieser veränderliche Übergangswiderstand ungehindert ausbilden kann. Da der veränderliche Übergangswiderstand empfindlicher auf eine Druckbelastung reagiert, können bereits leichte Drücke zuverlässig durch den neuen Sensor erkannt werden. Gleichzeitig kann die Zellengröße hinunter bis zu einer Ein-Garn-Elektrode skaliert werden, ohne dass Effekte von Übersprechen von Zellen eine Messung beeinflussen. Ebenso lassen sich die "blinden" Bereiche des Sensors minimieren, da diese im Wesentlichen nur noch von der Isolierung der einzelnen Elektroden zueinander abhängig sind und nicht mehr von dem druckempfindlichen Material der Zwischenschicht bzw. deren Format.

Die Fixierung ist eine Laminierung oder eine Naht. Gegenüber Kleben oder anderen Fixierungsmitteln können diese Fixierungen so gestaltet werden, dass sie die Schichten fixieren, ohne maßgeblichen Einfluss auf den veränderlichen Übergangswiderstand zu haben. Darüber hinaus sind Nähte sehr gut maschinell herstellbar und damit kostengünstig. Ebenso ist das Laminieren eine kostengünstige Möglichkeit der Fixierung, die gleichzeitig den Sensor vor äußeren Einflüssen schützen kann. Eine Laminierung hat zudem den Vorteil, dass neben der Fixierung der Schichten außerhalb der aktiven Flächen die Sensoranordnung auch gleichzeitig geschützt, vorzugsweise wasserdicht, verpackt ist. Damit ist ein besonders robuster Aufbau der neuen Sensoranordnung möglich.

In einer vorteilhaften Weiterbildung ist die erste Schicht ein textiles Flächengebilde, in welches der erste und der zweite leitende Bereich mit leitfähigem Garn eingewoben sind. Die erste Schicht und vorzugsweise die zweite Schicht sind somit strukturell gleichartig zur dritten Schicht, so dass sich besonders vorteilhaft ein messbarer, veränderlicher Übergangswiderstand einstellt. Indem die erste Schicht ein textiles Flächengebilde, beispielsweise ein Webstoff ist, und die Elektroden durch leitfähiges Garn gebildet werden, kann zudem auf einfache Weise eine durchgängige Schicht erzeugt werden, in der sich isolierende Bereiche und leitende Bereiche abwechseln, ohne dass die Struktur, insbesondere die Oberfläche, sich maßgeblich ändert. Gleichzeitig kann durch die durchgängige Ausbildung der Schicht als ein einziges textiles Flächengebilde eine mechanische Kopplung des ersten elektrischen Bereichs und des zweiten elektrischen Bereichs über einen nichtleitenden Bereich auf einfache Weise erreicht werden. Die erfindungsgemäße Fixierung der Schichten kann so besonders einfach und kostengünstig erstellt werden.

In einer weiteren vorteilhaften Weiterbildung ist das leitfähige, elastische Material der dritten Schicht ein Textil, insbesondere ein Microfasertuch, dem ein leitfähiges Additiv hinzugefügt ist. Diese Ausführung trägt vorteilhaft dazu bei, dass eine Druckbelastung maßgeblich über den veränderlichen Übergangswiderstand zwischen dem leitfähigen, elastischen Material der dritten Schicht und den Elektroden der ersten und zweiten Schicht bestimmt werden kann, da ein solches Microfasertuch eine besondere Oberfläche aufweist, die vorteilhaft mit textilartigen Elektroden zusammenwirken kann. Darüber hinaus kann eine solche Schicht einerseits flexibel und dünn ausgebildet sein und andererseits sehr robust gestaltet sein, womit sich besonders dünne Sensoren realisieren lassen, die gleichzeitig sehr robust sind.

Insbesondere ist das Additiv ein kohlenstoffbasiertes Additiv oder ein metallisches Additiv. Diese haben den Vorteil, dass die Leitfähigkeit der dritten Schicht so erhöht werden kann, dass der Durchgangswiderstand durch die dritte Schicht im Wesentlichen gegenüber dem Übergangswiderstand vernachlässigbar wird. Gleichzeitig verändert ein solches Additiv nicht die elastische Eigenschaft des Materials, welche maßgeblich für den Übergangswiderstand und insbesondere die Änderung des Übergangswiderstands bei Druckbelastung ist. Die Ausgestaltung trägt somit vorteilhaft dazu bei, dass die Empfindlichkeit des Sensors verbessert werden kann.

In einer weiteren vorteilhaften Weiterbildung weist die Fixierung mindestens eine Naht auf, die ausgebildet ist, die erste und dritte Schicht miteinander zu verbinden, wobei sich diese entlang des nichtleitenden Bereichs der ersten Schicht erstreckt. Indem sich die Naht entlang des nichtleitenden Bereichs der ersten Schicht erstreckt und der nichtleitende Bereich mit dem ersten und zweiten leitenden Bereich mechanisch gekoppelt ist, kann eine besonders einfache und kostengünstige Fixierung des ersten und zweiten elektrischen Bereichs in Bezug zur zweiten und dritten Schicht erreicht werden. In einer besonders vorteilhaften Weiterbildung ist die Naht ferner dazu ausgebildet, die zweite Schicht mit der ersten und dritten Schicht zu verbinden und sich entlang des nichtleitenden Bereichs der ersten Schicht und durch den dritten leitenden Bereich der zweiten Schicht zu erstrecken. Auf diese Weise können somit alle drei Schichten über eine einzelne Naht miteinander verbunden und eine Fixierung aller Schichten zueinander erreicht werden. Dies ermöglicht einen besonders günstigen Aufbau des erfindungsgemäßen Sensors, der sich leicht maschinell fertigen lässt.

In einer weiteren vorteilhaften Weiterbildung sind die erste und die zweite Schicht ein textiles Flächengebilde, in welches der erste, zweite und dritte leitende Bereich mittels leitfähigen Garns eingewoben sind. In dieser Ausgestaltung ist somit die zweite Schicht gleichartig zur ersten Schicht ausgebildet. Besonders vorteilhaft können somit die erste und die zweite Schicht aus dem gleichen Material und besonders vorteilhaft aus ein und demselben Werkstück gewonnen werden. Dies ermöglicht eine besonders günstige Fertigung des Sensors.

In einer weiteren vorteilhaften Weiterbildung weist das leitfähige, elastische Material einen Durchgangswiderstand auf, der so ausgebildet ist, dass er sich linear zu einer angelegten Spannung verhält, wenn sich die angelegte Spannung im Bereich von 0V bis 5V ändert. In dieser Ausgestaltung zeigt die dritte Schicht somit ohmsches Verhalten über einen definierten Spannungsbereich, wodurch eine Auswertung besonders gut möglich ist. Insbesondere kann bei ohmschen Verhalten der Durchgangswiderstand in Bezug zum veränderlichen Übergangswiderstand erfasst werden.

In einer weiteren vorteilhaften Ausgestaltung weist das leitfähige, elastische Material einen Temperaturänderungskoeffizienten zwischen 0,75 und 1,25 auf, wobei der Temperaturänderungskoeffizient ein Faktor ist, der die maximale Stromänderung bei Erwärmung auf 70° Celsius und Abkühlung auf -20° Celsius beschreibt. Bei der Verwendung eines solchen elastischen Materials kann der Durchgangswiderstand über einen vorteilhaften Einsatzbereich gegenüber dem veränderlichen Übergangswiderstand eindeutig bestimmt werden.

In einer weiteren vorteilhaften Weiterbildung überlappt der dritte elektrisch leitende Bereich der zweiten Schicht den ersten und zweiten elektrischen Bereich sowie den elektrisch nichtleitenden Bereich der ersten Schicht und definiert einen Bereich, in dem die dritte Schicht in Bezug zur ersten und zweiten Schicht eine ununterbrochene, geschlossene Oberfläche aufweist. Bei dieser Ausgestaltung ist die dritte Schicht somit eine durchgängige und insbesondere geschlossene Schicht. Das heißt, die dritte Schicht kann in einem Stück in den Sensor eingelegt werden, ohne dass weitere Bearbeitungsschritte an der Schicht notwendig sind. Dies ermöglicht eine besonders kostengünstige Ausgestaltung der neuen Sensoranordnung.

In einer weiteren vorteilhaften Weiterbildung ist die Fixierung ferner so ausgebildet, dass die erste, zweite und dritte Schicht im aktiven Bereich unbelastet aufeinanderliegen und die einander zugewandten Oberflächen der ersten, zweiten und dritten Schicht im Wesentlichen frei von einer Fixierung sind. In dieser Ausgestaltung ist die Fixierung somit auch für die zweite Schicht analog ausgebildet. Dies hat den Vorteil, dass die Übergangswiderstände an beiden Schichtübergängen vorteilhaft genutzt werden können, wodurch das angewandte Messprinzip noch weiter begünstigt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Ausführungsbeispiels der neuen mehrschichtigen Sensoranordnung,
- Fig. 2: ein Ausführungsbeispiel der ersten oder zweiten Schicht einer neuen Sensoranordnung,
- Fig. 3: ein Ausführungsbeispiel der dritten Schicht der neuen Sensoranordnung,
- Fig. 4: eine schematische Darstellung eines Ausführungsbeispiels der neuen Sensoranordnung mit vier Sensorzellen,

- Fig. 5: eine vereinfachte schematische Darstellung einer Messschaltung eines Ausführungsbeispiels der neuen Sensoranordnung,
- Fig. 6: eine schematische Darstellung des Wirkprinzips der neuen Sensoranordnung,
- Fig. 7: eine Draufsicht auf ein Ausführungsbeispiel der neuen Sensoranordnung, und
- Fig. 8: eine schematische Darstellung zweier Anwendungsfälle, in denen ein Ausführungsbeispiel der neuen Sensoranordnung verwendet wird.

Gleiche Bezugszeichen in den jeweiligen Figuren bezeichnen gleiche Teile.

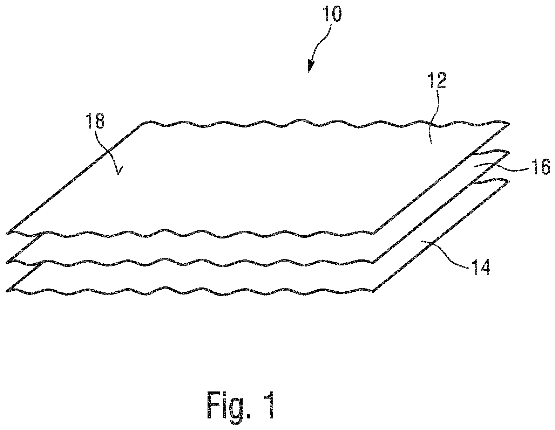

Fig. 1 zeigt in einer schematischen Darstellung ein Ausführungsbeispiel der neuen Sensoranordnung, die hier in ihrer Gesamtheit mit der Bezugsziffer 10 bezeichnet ist.

Die neue Sensoranordnung 10 umfasst eine erste Schicht 12, eine zweite Schicht 14 und eine zwischen der ersten und zweiten Schicht liegende dritte Schicht 16. Die erste, zweite und dritte Schicht 12, 14, 16 sind flächige Gebilde, die bündig übereinandergelegt einen druckempfindlichen Sensor mit mindestens zwei Sensorzellen (hier nicht einzeln dargestellt) bilden.

Die erste, zweite und dritte Schicht 12, 14, 16 erstrecken sich folglich im Wesentlichen in der Fläche und sind tuch- bzw. folienartig ausgebildet. Die flexible Eigenschaft der einzelnen Schichten bleibt vorzugsweise auch nach dem Zusammenlegen erhalten, so dass die Sensoranordnung 10 insgesamt eine flexible Einheit ist, die sich ähnlich wie eine Stoffbahn zusammenrollen und verarbeiten lässt. Neben den drei für den druckempfindlichen Sensor wesentlichen Schichten können weitere Schichten vorgesehen sein, wie beispielsweise eine oberhalb und unterhalb angeordnete Schicht aus wasserundurchlässigem Material, mittels derer die drei Schichten 12, 14, 16 wasserdicht versiegelt werden können.

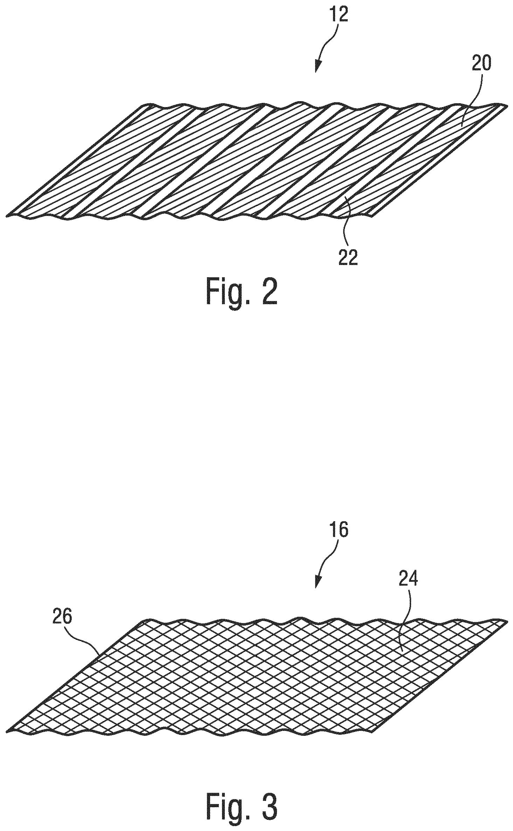

Die einzelnen Schichten 12, 14, 16 können in bevorzugten Ausführungsbeispielen wenige Millimeter dick sein, vorzugsweise zwischen 0,5 mm bis 1,5 mm. In der Fläche kann die Sensoranordnung 10 hingegen nahezu beliebig von einigen Quadratzentimetern bis hin zu einigen Quadratmetern ausgedehnt sein. Wie im Nachfolgenden noch näher erläutert wird, sind die drei Schichten der Sensoranordnung 10 so ausgebildet, dass eine mechanische Belastung auf die Oberfläche 18 der Sensoranordnung 10 registriert werden kann. In bevorzugten Ausführungsbeispielen kann neben der Bestimmung einer Belastung zusätzlich deren Stärke und insbesondere deren Position auf der Oberfläche 18 der Sensoranordnung 10 bestimmt werden. Hierfür sind die erste, zweite und dritte Schicht 12, 14, 16, wie nachfolgend mit Bezug auf die Figuren 2 und 3 näher erläutert, speziell ausgebildet.

Fig. 2 zeigt ein Ausführungsbeispiel einer ersten Schicht 12 der neuen Sensoranordnung 10. Die Schicht 12 ist in diesem bevorzugten Ausführungsbeispiel ein textiles Flächengebilde, in welches elektrische Strukturen eingearbeitet sind. Vorzugsweise handelt es sich bei der ersten Schicht 12 um ein Gewebe, in das durch die Verwendung von elektrisch leitfähigen Fäden und elektrisch nichtleitfähigen Fäden eine elektrische Struktur eingearbeitet ist. Wie in der Fig. 2 gezeigt, wechseln hier elektrisch leitende Bereiche 20 und elektrisch nichtleitende Bereiche 22 einander ab. Bei den elektrisch leitenden Bereichen 20 sind hier beim Weben die Schussfäden aus elektrisch leitfähigem Garn, während in den nichtleitenden Bereichen 22 gewöhnliches nichtleitendes Garn als Schussfäden verwendet wird, wodurch das hier dargestellte streifenartige Muster entsteht. Die Breite der streifenartigen elektrischen leitenden Bereiche 20 und die Breite der streifenartigen elektrisch nichtleitenden Bereiche bestimmt, wie im Nachfolgenden noch näher erläutert ist, die Größe und Geometrie einer Sensorzelle, und somit die Auflösung des druckempfindlichen Sensors. Während hier die leitenden und nichtleitenden Bereiche jeweils die gleiche Breite besitzen, kann in anderen Ausführungsbeispielen die Breite über die Fläche der ersten Schicht 12 auch variieren. Dies hat den Vorteil, dass die Auflösung des Sensors an die jeweilige Anforderung angepasst werden kann.

In bevorzugten Ausführungsbeispielen ist die zweite Schicht 14 gleichartig zur ersten Schicht 12 ausgebildet. Das heißt, die erste und die zweiten Schicht 12, 14 können aus ein und demselben Werkstück gewonnen werden. Dies ermöglicht eine besonders kostengünstige und effiziente Herstellung der neuen Sensoranordnung. Das Werkstück wird dazu in zwei gleich große Teil geteilt, die verdreht zueinander, vorzugweise um 90°, übereinandergelegt werden, wobei zwischen die erste und zweite Schicht noch die dritte Schicht platziert wird, die im Folgenden mit Bezug auf die Fig. 3 beschrieben wird.

Fig. 3 zeigt ein Ausführungsbeispiel einer dritten Schicht 16 der neuen Sensoranordnung 10. Die dritte Schicht ist aus einem druckempfindlichen, leitfähigen Material 24 gebildet und zwischen der ersten Schicht 12 und der zweiten Schicht 14 angeordnet. Das druckempfindliche Material 24 hat einen spezifischen Durchgangswiderstand, der sich bei mechanischer Belastung ändert. Insbesondere ist das druckempfindliche Material 24 elastisch, so dass es nach einer mechanischen Belastung wieder seine ursprüngliche Form einnimmt.

Die dritte Schicht 16 ist vorzugsweise aus nicht gewobenem, leitfähigem Stoff. Besonders bevorzugt ist die dritte Schicht ein nicht gewobenes Microfasertuch 26, dessen Fasern mit einer leitfähigen Beschichtung überzogen sind. Die Beschichtung kann beispielsweise eine kohlenstoffbasierte Beschichtung oder eine metallische Beschichtung sein. Durch die Beschichtung wird die dritte Schicht leitfähig. Die Oberfläche der dritten Schicht ist vorzugsweise rau. Insbesondere ist die Oberfläche der dritten Schicht auf die Oberfläche der ersten und zweiten Schicht abgestimmt, so dass beim Aufeinanderdrücken ein Übergangswiderstand zwischen den Oberflächen minimiert wird. Sobald die Belastung wieder entfernt wird, lösen sich die Oberflächen wieder voneinander, so dass sich der ursprüngliche Übergangswiderstand einstellt. Eine Hysterese ist dabei möglichst gering.

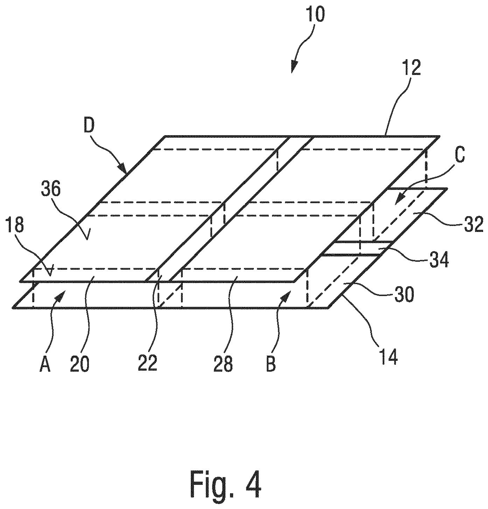

In einem bevorzugten Ausführungsbeispiel wird die dritte Schicht 16 am Stück zwischen die erste und die zweite Schicht 12, 14 gelegt. Das heißt, die dritte Schicht 16 hat eine durchgängige und insbesondere geschlossene Oberfläche, die sich homogen zwischen der ersten und der zweiten Schicht erstreckt. Vorteilhafterweise muss die dritte Schicht für die Bildung einzelner Sensorzellen somit nicht gesondert angepasst werden, wie in Bezug auf die folgende Fig. 4 näher erläutert ist.

Fig. 4 zeigt ein vereinfachtes Ausführungsbeispiel der neuen Sensoranordnung 10 mit einer ersten Schicht 12 und einer zweiten Schicht 14. Zur besseren Darstellung wurde bei dieser Sensoranordnung 10 die dritte Schicht, welche zwischen der ersten Schicht 12 und der zweiten Schicht 14 angeordnet ist, weggelassen.

Die erste Schicht 12 weist einen ersten elektrisch leitenden Bereich 20 sowie einen zweiten elektrisch leitenden Bereich 28 auf. Zwischen dem ersten elektrisch leitenden Bereich 20 und dem zweiten elektrisch leitenden Bereich 28 ist ein elektrisch nichtleitender Bereich 22 angeordnet. Der erste elektrisch leitende Bereich 20 und der zweite elektrisch leitende Bereich 28 sind zusammen mit dem nichtleitenden Bereich 22 aus einem Werkstück gebildet, so dass die elektrisch leitenden Bereiche 20, 28 und der elektrisch nichtleitende Bereich 22 mechanisch zusammenhängen. Vorzugsweise sind, wie in Bezug auf die Fig. 2 erläutert, die elektrisch leitende Bereiche 20, 28 und der elektrisch nichtleitende Bereich durch die Verwendung von elektrisch leitfähigen Fäden und elektrisch nichtleitfähigen Fäden in einen Webstoff eingearbeitet.

Die zweite Schicht 14 ist analog zu ersten Schicht 12 ausgebildet. Die zweite Schicht 14 weist hier einen dritten elektrisch leitenden Bereich 30 und einen vierten leitenden Bereich 32 auf. Der dritte und vierte elektrisch leitende Bereich sind durch einen weiteren nichtleitenden Bereich 34 voneinander getrennt. Die erste Schicht 12 und die zweite Schicht 14 sind in diesem Ausführungsbeispiel um 90° gedreht übereinandergelegt und erzeugen vier Sensorzellen. In den Bereichen, in denen sich die elektrisch leitenden Bereiche 20, 28, 30, 32 überlappen, sind Sensorzellen A, B, C, D der Sensoranordnung 10 ausgebildet.

Eine Sensorzelle A, B, C, D umfasst folglich immer einen elektrisch leitenden Bereich 20, 28 der ersten Schicht 12 und einen elektrisch leitenden Bereich 30, 32 der zweiten Schicht 14 sowie das druckempfindliche Material 24 der dritten Schicht, welches sich homogen zwischen der ersten Schicht 12 und der zweiten Schicht 14 erstreckt.

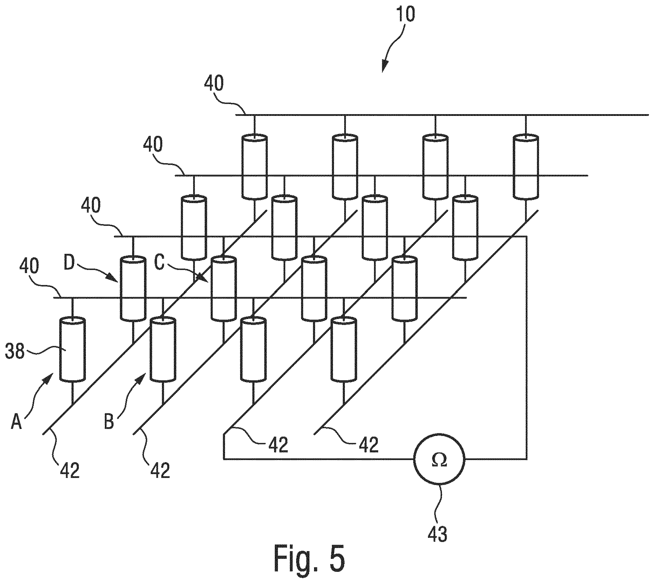

Die durch die Überlappungsbereiche gebildeten Sensorzellen definieren an der Sensoroberfläche 18 aktive Bereiche 36, an denen eine Druckbelastung auf die Sensoranordnung 10 bestimmt werden kann. Die aktiven Bereiche 36 sind in diesem Ausführungsbeispiel quadratische Felder, die durch die nichtleitenden Bereiche 22, 34 voneinander beabstandet sind. Vorzugsweise sind die nichtleitenden Bereiche 22, 34 im Verhältnis klein gegenüber den aktiven Bereichen 36, so dass die Bereiche, in denen eine Druckbestimmung nicht möglich ist, möglichst gering sind. Vorzugsweise bilden die aktiven Bereiche eine nahezu geschlossene Oberfläche, über die eine Druckverteilung bestimmt werden kann. Dies ist aufgrund des besonderen Wirkprinzips möglich, welches ein Übersprechen von einer Zelle zu einer benachbarten Zelle auch bei eng aneinander angeordneten Zellen verhindert. Das Wirkprinzip zur Bestimmung der Druckverteilung über die Sensoroberfläche 18 wird im Folgenden mit Bezug auf die Figur 5 näher erläutert.

Fig. 5 zeigt ein Ersatzschaltbild der neuen Sensoranordnung 10. Die Sensoranordnung 10 weist hier insgesamt sechzehn Sensorzellen auf, die schematisch durch ihren jeweiligen elektrischen Widerstand 38 angedeutet sind. Über erste Elektroden 40 und zweite Elektroden 42 sind die Sensorzellen einzeln kontaktierbar und deren elektrischer Widerstand 38 bestimmbar. Die ersten und zweiten Elektroden 40, 42 werden hierzu paarweise mit einer Auswerteelektronik 43 verbunden, beispielsweise über zwischengeschaltete Multiplexer (hier nicht dargestellt). Die Auswerteelektronik 43 ist dazu eingerichtet, den elektrischen Widerstand 38 einer Sensorzelle zu bestimmen. Eine einfache Auswerteelektronik kann beispielsweise den Spannungsabfall zwischen der ersten und der zweiten Elektrode 40, 42 bestimmen und daraus auf den jeweiligen elektrischen Widerstand 38 der momentan kontaktierten Sensorzelle schließen. Es versteht sich, dass die Auswerteelektronik 43 auch aufwendiger als hier dargestellt ausgebildet sein kann, beispielsweise in Form eines Mikrocontrollers oder einer Signalverarbeitungseinheit, die eine komplexe Signalverarbeitung erlauben.

Die Sensorzelle A, B, C, D der Sensoranordnung 10 sind wie zuvor beschrieben ausgebildet, bei einer Druckbelastung ihren elektrischen Widerstand 38 zu ändern. Somit kann durch die Bestimmung des elektrischen Widerstands 38 einer Sensorzelle unmittelbar auf die jeweilige Druckbelastung der Zelle geschlossen werden. Indem nacheinander für alle Sensorzellen entsprechende Werte bestimmt werden, kann eine Druckverteilung über die Sensorfläche 18 der Sensoranordnung 10 ermittelt werden.

Der elektrische Widerstand 38 umfasst dabei mehrere einzelne den Gesamtwiderstand bildende Komponenten. Von Bedeutung sind dabei insbesondere der druckveränderliche Durchgangswiderstand der dritten Schicht sowie der druckveränderliche Übergangswiderstand zwischen den Elektroden und der dritten Schicht.

Während bei Drucksensoren aus dem Stand der Technik der elektrische Widerstand 38 einer Sensorzelle im Wesentlichen von dem unter Druck veränderlichen Durchgangswiderstand abhängt, hängt der elektrische Widerstand 38 gemäß der neuen Sensoranordnung 10 vorzugsweise sowohl von dem druckempfindlichen Material 24 der dritten Schicht, also dem druckveränderlichen Durchgangswiderstand, als auch von dem druckveränderlichen Übergangswiderstand ab, der sich aus dem Zusammenwirken der ersten und zweiten Elektroden einer Sensorzelle und dem dazwischen befindlichen Material ergibt.

Insbesondere wird bei erfindungsgemäßen Sensoren primär auf den druckveränderlichen Widerstand abgestellt, da sich herausgestellt hat, dass dieser bei entsprechenden Geometrien des Sensors aussagekräftiger ist als der druckveränderliche Durchgangswiderstand. Denkbar wäre somit auch, dass ausschließlich auf den druckveränderlichen Übergangswiderstand abgestellt wird und die Effekte der weiteren Komponenten des elektrischen Widerstands 38 entweder durch eine entsprechende elektrische Schaltung kompensiert oder rechentechnisch bei der Auswertung beseitigt werden. Hierfür ist insbesondere eine genaue Kenntnis der elektrischen Eigenschaften der dritten Schicht notwendig, die daher vorteilhafterweise aus einem Material gefertigt ist, das annährend lineares, also ohmsches, Verhalten zeigt.

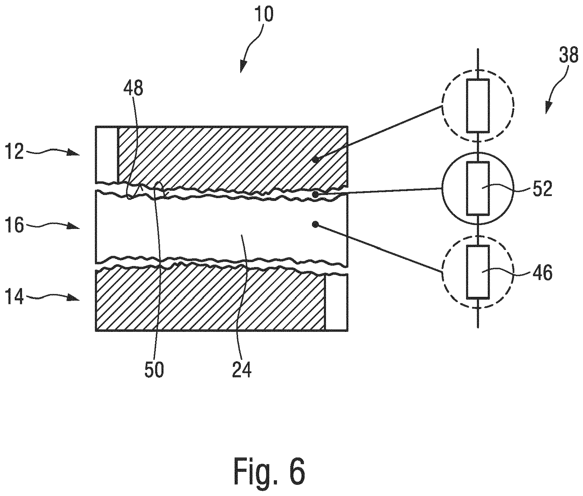

Mit Bezug auf die Fig. 6 wird im Folgenden das Wirkprinzip in Bezug auf den druckveränderlichen Übergangswiderstand näher erläutert.

Fig. 6 zeigt eine Zelle der neuen Sensoranordnung 10 in einer Querschnittsdarstellung (links) sowie ein entsprechendes elektrisches Ersatzschaltbild (rechts). Die Sensorzelle ist aus einer ersten Schicht 12, einer zweiten Schicht 14 und einer dritten Schicht 16 gebildet. Die Schichten 12, 14, 16 liegen im Wesentlichen frei aufeinander, wobei zumindest die erste Schicht 12 und die dritte Schicht 16 aus elastischem Material gebildet sind. Vorzugsweise ist darüber hinaus auch die zweite Schicht 14 analog zur ersten Schicht 12 ausgebildet.

Das druckempfindliche Material 24 der dritten Schicht 16 weist einen spezifischen druckveränderlichen Durchgangswiderstand 46 auf. Der Durchgangswiderstand 46 ist für alle Sensorzellen im unbelasteten Zustand gleich. Vorzugsweise ist der Durchgangswiderstand 46 linear über einen definierten Spannungsbereich. Mit anderen Worten das leitfähige, elastische Material 24 der dritten Schicht 16 zeigt über einen definierten Spannungsbereich, insbesondere im Spannungsbereich von 0V bis 5V, ohmsches Verhalten. Der Durchgangswiderstand 46 ist somit vorzugsweise messtechnisch eindeutig bestimmbar.

In Serie zum Durchgangswiderstand 46 bildet sich zwischen der Oberfläche 48 der ersten Schicht 12 und der Oberfläche 50 ein Übergangswiderstand 52 aus. Der Übergangswiderstand 52 ist ebenfalls druckveränderlich und ändert sich wie der Durchgangswiderstand 46 in Abhängigkeit der Druckbelastung der Sensorzelle. Das heißt, die Oberfläche 48 der ersten Schicht und die Oberfläche 50 der dritten Schicht 16 sind so ausgebildet, dass sie bei einer Druckbelastung zusammenwirken, beispielsweise indem sie ineinandergreifen, wodurch die Kontaktfläche zwischen den beiden Schichten vergrößert wird und sich der Übergangswiderstand 52 verkleinert. Der druckveränderliche Übergangswiderstand 52 kann für alle Sensorzellen im unbelasteten Zustand gleich. Alternative kann in Abhängigkeit der Geometrie einer Sensorzelle der druckveränderliche Übergangswiderstand 52 im unbelasteten Zustand auch individuell für eine Zelle eingestellt sein. Eine Auswertung muss entsprechend angepasst werden.

Sowohl der Durchgangswiderstand 46 als auch der Übergangswiderstand 52 sind so ausgebildet, dass, sobald eine Zelle nicht mehr belastet wird, diese ihre ursprünglichen Werte einnehmen bei möglichst geringer Hysterese. Beispielsweise sind die erste und dritte Schicht 12, 16 aufgrund ihrer Elastizität so ausgebildet, dass die Oberfläche 48 und die Oberfläche 50 auseinandergezogen werden, sobald der Druck auf die Zelle nachlässt.

Wie vorstehend beschrieben sind der druckveränderliche Durchgangswiderstand 46 und der druckveränderliche Übergangswiderstand 52 beides Komponenten des Gesamtwiderstands 38 einer Sensorzelle der neuen Sensoranordnung 10. Es hat sich gezeigt, dass bei einer Druckbelastung sich zunächst vorteilhaft der Übergangswiderstand 52 ändert, bevor sich der Durchgangswiderstand 46 des druckempfindlichen Materials 24 der dritten Schicht 16 ändert. Mit anderen Worten kann über den veränderlichen Übergangswiderstand 52 eine empfindlichere Druckmessung durchgeführt werden, als bei herkömmlichen Drucksensoren, die primär auf den Durchgangswiderstand des druckempfindlichen Materials 24 abstellen, um eine Druckbelastung zu bestimmen.

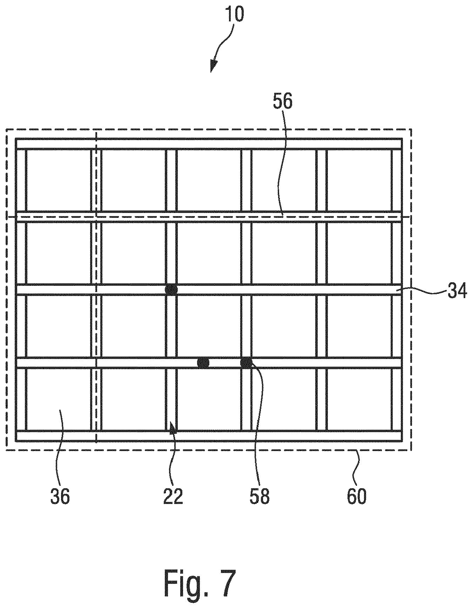

Um den Effekt des Übergangswiderstands 52 als primäre Messgröße zu nutzen, ist es von Vorteil, wenn die einander zugewandten Oberflächen 48, 50 der ersten und dritten Schicht 12, 16 "frei" aufeinanderliegen. Frei bedeutet in diesem Zusammenhang, dass die erste Schicht 12 und die dritte Schicht 16 zwar zueinander fixiert sein können, aber durch die Fixierung das Zusammenwirken der Oberflächen nicht beeinflusst wird, beispielsweise indem die Fixierung die Oberflächen aufeinanderdrückt. Der Fixierung kommt somit bei dem erfindungsgemäßen Sensor eine besondere Bedeutung zu, die im Folgenden anhand der Fig. 7 näher erläutert wird.

Fig. 7 zeigt die neue Sensoranordnung 10 in einer Draufsicht. Die Sensoranordnung 10 umfasst hier zwanzig Sensorzellen mit rechteckigen aktiven Bereichen 36. Die aktiven Bereiche 36 sind durch die Überlappungsbereiche der elektrisch leitenden Bereiche der ersten Schicht und der zweiten Schicht definiert und durch die elektrisch nichtleitenden Bereiche 22, 34 voneinander beabstandet.

Die Sensoranordnung 10 weist hier beispielhaft verschiedene erfindungsgemäße Fixierungen auf.

Die erste Fixierung 56 ist eine Naht, die entlang des nichtleitenden Bereichs 34 verläuft. Die Naht erstreckt sich durch die erste Schicht und mindestens die dritte Schicht, und vorzugsweise auch noch durch die zweite Schicht, um diese zueinander zu fixieren. In einem bevorzugten Ausführungsbeispiel ist in jedem elektrisch nichtleitenden Bereich 22, 34 eine solche Naht angeordnet. Da es sich bei der ersten, zweiten und dritten Schicht vorzugsweise um Textilien handelt, kann eine Naht besonders leicht erstellt werden. Entscheidend an der Fixierung ist, dass diese durch die nichtleitenden Bereiche zumindest einer der ersten oder zweiten Schicht verläuft, so dass gewährleistet ist, dass die Fixierung 56 nicht über den aktiven Bereich 36 einer Sensorzelle verläuft.

Die Naht 56 fixiert somit die Schichten miteinander, ohne die Kontaktflächen zwischen der ersten und dritten Schicht zu beeinflussen. Eine Naht hat den Vorteil, dass diese besonders schmal ausgeführt werden kann, so dass nur ein sehr schmaler elektrisch nichtleitender Bereich ausreichend ist, um die Naht aufzunehmen. Damit können die toten Bereiche des Sensors vorteilhaft klein gehalten werden. Es versteht sich jedoch, dass eine Naht 56 nur eine Möglichkeit darstellt, wie die erste, zweite und dritte Schicht miteinander verbunden werden können. Andere Alternativen sind denkbar.

Alternativ zu der zuvor beschriebenen direkten Fixierung der ersten, zweiten und dritten Schicht kann auch eine indirekte Fixierung der Schichten erfolgen. Eine solche dritte Fixierung ist hier mit der Bezugsziffer 60 angedeutet. Die dritte Fixierung 60 umschließt die Sensoranordnung 10 und ist somit ebenfalls außerhalb des aktiven Bereichs der Sensorzellen angeordnet. Beispielsweise kann die dritte Fixierung 60 durch eine Laminierung des druckempfindlichen Sensors erstellt werden. Beim Laminieren wird oberhalb und unterhalb der Sensoranordnung 10 jeweils ein Folienstück vorgesehen, welches ein Verbindungsmittel aufweist, mit dem es auf der von der dritten Schicht abgewandten Oberfläche der ersten bzw. zweiten Schicht geklebt wird. Die Folienstücke gehen dabei über die einzelnen Schichten hinaus und sind an den Rändern zusammengeklebt. Damit sind die einzelnen Schichten zueinander fixiert, ohne dass die Oberflächen 48, 50 der Sensorzellen durch die Fixierung beeinflusst werden.

Durch die Fixierungen kann vorteilhaft bei der Bestimmung der Druckverteilung auf den druckveränderlichen Übergangswiderstand abgestellt werden, wodurch ein druckempfindlicherer, jedoch gleichzeitig robuster, taktiler Sensor erstellt werden kann.

Es versteht sich, dass neben den vorstehend genannten Fixierungen 56, 58, 60 weitere Fixierungen denkbar sind. Insbesondere können die genannten Fixierungen auch miteinander kombiniert werden, um den erfindungsgemäßen Sensor zu bilden. Entscheidend bei den Fixierungen ist, dass innerhalb der Sensorzellen die einzelnen Schichten unbelastet und frei aufeinanderliegen, so dass sich der druckveränderliche Übergangswiderstand ausbilden kann.

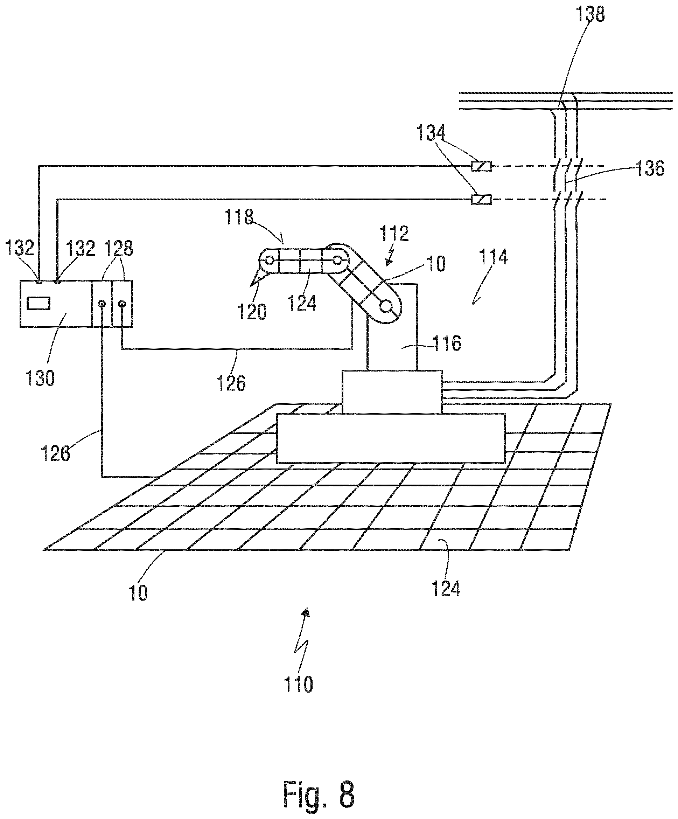

Im Folgenden werden anhand der Fig. 8 Anwendungsfälle dargestellt, in denen die neue Sensoranordnung vorteilhaft Verwendung finden kann. Es versteht sich, dass die erfindungsgemäße Sensoranordnung nicht auf diese bevorzugten Ausführungsbeispiele beschränkt ist.

In der Fig. 8 sind zwei Ausführungsbeispiele gezeigten, in denen die neue Sensoranordnung 10 als Schutzeinrichtung 110, 112 zum Absichern einer technischen Anlage verwendet wird. Beide Schutzeinrichtungen 110, 112 überwachen hier eine technische Anlage 114, die hier als automatisiert arbeitender Roboter 116 angedeutet ist. Bei dem Roboter 116 kann es sich beispielsweise um einen Schneid- oder Schweißroboter in einer Fertigungs- oder Montagelinie handeln.

Der zu überwachende Roboter 116 hat hier einen frei beweglichen Roboterarm 118, an dessen Ende sich ein Werkzeug 120 befindet. Der Dreh- und Schwenkbereich des Roboterarms 118 definiert einen Wirkungsbereich des Roboters 116, der gleichzeitig ein Gefahrenbereich des Roboters 116 darstellt. Ein Eintreten in den Gefahrenbereich - sowohl unberechtigtes als auch berechtigtes - muss erkannt werden, sodass der Roboter 116 in einen für Personen oder Gegenstände ungefährlichen Zustand überführt werden kann. Die Erkennung erfolgt hier durch die Schutzeinrichtungen 110 und 112, die mit einem Sicherheitssystem 130 gekoppelt sind.

Das Sicherheitssystem 130 kann eine Ausgangsschalteinrichtung im Sinne der EN ISO 13856-1 sein, beispielsweise ein einfaches Sicherheitsschaltgerät, eine konfigurierbare Sicherheitssteuerung oder aber eine programmierbare Steuereinheit. Das Sicherheitssystem 130 ist dazu ausgebildet, die technische Anlage 114 in einen für Personen ungefährlichen Zustand zu überführen, beispielsweise indem die technische Anlage 114 stromlos geschaltet wird.

Im ersten Ausführungsbeispiel ist Schutzeinrichtung 110 ist eine Trittmatte, die am Boden im Bereich um die technische Anlage 114 angeordnet ist. Im zweiten Ausführungsbeispiel ist die Schutzeinrichtung 112 eine Verkleidung des Roboterarms 118, die hier als berührungssensitive "Haut" des Roboters 116 wirkt. Beide Schutzeinrichtungen 110, 112 weisen eine neue Sensoranordnung 10 auf, die aus einer Vielzahl von einzelnen Sensorzellen 124 gebildet ist. Insbesondere der zweite Anwendungsfall verdeutlicht die Flexibilität der neuen Sensoranordnung 10, so dass diese an verschiedene Formen, wie hier bspw. der Form des Roboterarms 118, angepasst werden kann.

Wie zuvor erläutert, ist die Sensoranordnung 10 dazu ausgebildet, eine Druckveränderung in einer der Sensorzellen 124 zu detektieren und in Abhängigkeit der Detektion ein entsprechendes Ausgangssignal zu erzeugen. Das Ausgangssignal wird über die Leitungen 126 an Eingangsmodule 128 des Sicherheitssystems 130 übertragen, welches die Signale auswertet und in Abhängigkeit davon eine Reaktion auslöst. Das Sicherheitssystem 130 ist in diesem Ausführungsbeispiel für diesen Zweck über Ausgänge 132 mit Schützen 134 verbunden, deren Arbeitskontakte 136 in einer Stromversorgung 138 des Roboters 116 angeordnet sind.

Wird eine Sensorzelle 124 der Trittmatte 110 im Gefahrenbereich der technischen Anlage 114 belastet oder wird durch die Roboterhaut 112 eine Berührung mit einem Gegenstand oder einer Person detektiert, schaltet das Sicherheitssystem 130 die Ausgänge 132 ab, so dass die Schütze 134 abfallen und die technische Anlage 114 durch Öffnen der Arbeitskontakte 136 stromlos geschaltet wird. Durch das Stromlosschalten wird die technische Anlage 114 in einen für Personen oder Gegenstände sicheren Zustand überführt.

Es versteht sich, dass das Stromlosschalten der technischen Anlage 114 nur eine Möglichkeit darstellt, die technische Anlage 114 in einen sicheren Zustand zu überführen. Alternativ oder ergänzend kann in einem anderen Ausführungsbeispiel das Sicherheitssystem 130 auch steuernd in den Bewegungsablauf des Roboters 116 eingreifen, um einen sicheren Zustand herbeizuführen, beispielsweise indem der Roboter 116 den Roboterarm 118 einzieht. Ebenso ist es denkbar, dass die Ausgangssignale der Sensoranordnungen 10 der ersten Schutzeinrichtung 110 und der zweiten Schutzeinrichtung 112 oder die Ausgangssignale weiterer Schutzeinrichtungen kombiniert betrachtet werden und das Sicherheitssystem 130 aus der Zusammenschau eine Entscheidung über die Ansteuerung des Roboters 116 trifft. Weitere Schutzeinrichtungen können beispielsweise berührungslos wirkende Schutzeinrichtungen (BWS), wie Lichtschranken oder Lichtgitter, oder aber ein sicheres Kamerasystem sein.

Für die vorstehend genannten druckempfindlichen Schutzeinrichtungen sind die allgemeinen Grundsätze und Anforderungen an die sichere Gestaltung und deren Überprüfung, wie sie in der EN ISO 13856-1 festgelegt sind, einzuhalten. Insbesondere sind in dieser Norm die Mindestsicherheitsanforderungen in Bezug auf die Leistungsfähigkeit, Kennzeichnung und Dokumentation angegeben. So muss beispielsweise gewährleistet sein, dass eine Schutzreinrichtung zum Absichern einer technischen Anlage in einem definierten Temperaturbereich von -20° Celsius bis 70° Celsius ohne Einschränkungen funktionsfähig ist. Diese Anforderungen lassen sich besonders gut und kostengünstig durch die neue, erfindungsgemäße Sensoranordnung 10 erfüllen.

Es versteht sich, dass die neue Sensoranordnung 10 nicht auf die vorstehend genannten Anwendungsfälle beschränkt ist, sondern auch anderweitig vorteilhaft eingesetzt werden kann, insbesondere in Anwendung die hohe Anforderungen an die Robustheit, Zuverlässigkeit und Genauigkeit des verwendeten druckempfindlichen Sensor stellen.

## Patentansprüche

1. Sensoranordnung (10) mit einer ersten (12), zweiten (14) und zwischen der ersten und zweiten Schicht liegenden dritten Schicht (16) aus flexiblem Material, die übereinandergelegt einen druckempfindlichen Sensor mit mindesten zwei Sensorzellen bilden,
die erste Schicht (12) umfasst einen ersten (20) und einen zweiten (28) sich in der Fläche erstreckenden, elektrisch leitenden Bereich, die über einen elektrisch nichtleitenden Bereich (22) mechanisch miteinander verbunden sind, und die zweite Schicht (14) umfasst einen dritten (30) sich in der Fläche erstreckenden leitenden Bereich,
wobei der dritte elektrisch leitende Bereich (30) der zweiten Schicht (14) den ersten und zweiten elektrisch leitenden Bereich (20, 28) der ersten Schicht (12) überlappt und der Bereich der Überlappung einen aktiven Bereich (36) einer ersten und einer zweiten Sensorzelle definiert, und
wobei die dritte Schicht (16) aus einem leitfähigen, elastischen Material (24) gebildet ist, das im aktiven Bereich (36) mit dem ersten und zweiten leitenden Bereich (20, 28) der ersten Schicht (12) bei einer lokalen mechanischen Belastung zusammenwirkt, so dass sich ein elektrischer Widerstand (38) zwischen dem ersten, zweiten und dritten elektrischen Bereich (20, 28, 30) im Ort der Druckbelastung ändert,
**dadurch gekennzeichnet, dass** die Sensoranordnung eine Naht (56) aufweist, die so ausgebildet ist, dass sie die erste und zweite Schicht (12, 14) zueinander fixiert, wobei die Naht (56) außerhalb des aktiven Bereichs (36) angeordnet ist, so dass die erste und dritte Schicht (12, 16) im aktiven Bereich (36) unbelastet aufeinanderliegen und die einander zugewandten Oberflächen (48, 50) der ersten und dritten Schicht (12, 16) frei von einer Fixierung sind.

2. Sensoranordnung (10) mit einer ersten (12), zweiten (14) und zwischen der ersten und zweiten Schicht liegenden dritten Schicht (16) aus flexiblem Material, die übereinandergelegt einen druckempfindlichen Sensor mit mindesten zwei Sensorzellen bilden,
die erste Schicht (12) umfasst einen ersten (20) und einen zweiten (28) sich in der Fläche erstreckenden, elektrisch leitenden Bereich, die über einen elektrisch nichtleitenden Bereich (22) mechanisch miteinander verbunden sind, und die zweite Schicht (14) umfasst einen dritten (30) sich in der Fläche erstreckenden leitenden Bereich,
wobei der dritte elektrisch leitende Bereich (30) der zweiten Schicht (14) den ersten und zweiten elektrisch leitenden Bereich (20, 28) der ersten Schicht (12) überlappt und der Bereich der Überlappung einen aktiven Bereich (36) einer ersten und einer zweiten Sensorzelle definiert, und
wobei die dritte Schicht (16) aus einem leitfähigen, elastischen Material (24) gebildet ist, das im aktiven Bereich (36) mit dem ersten und zweiten leitenden Bereich (20, 28) der ersten Schicht (12) bei einer lokalen mechanischen Belastung zusammenwirkt, so dass sich ein elektrischer Widerstand (38) zwischen dem ersten, zweiten und dritten elektrischen Bereich (20, 28, 30) im Ort der Druckbelastung ändert,
**dadurch gekennzeichnet, dass** die Sensoranordnung eine Laminierung (60) aufweist mit mindestens einem Folienstück, welches eine von der dritten Schicht (16) abgewandte Oberfläche der ersten Schicht (12) bedeckt und sich über die erste, zweite und dritte Schicht (12, 14, 16) hinaus erstreckt, wobei die Laminierung (60) außerhalb des aktiven Bereichs (36) angeordnet ist und so ausgebildet ist, dass sie die erste und zweite Schicht (12, 14) zueinander fixiert, die erste und dritte Schicht (12, 16) im aktiven Bereich (36) unbelastet aufeinanderliegen und die einander zugewandten Oberflächen (48, 50) der ersten und dritten Schicht (12, 16) frei von einer Fixierung sind.

3. Sensoranordnung nach einem der Ansprüche 1 oder 2, wobei die erste Schicht (12) ein textiles Flächengebilde ist, in welches der erste (20) und zweite leitende Bereich (28) mittels leitfähigen Garns eingewoben sind.

4. Sensoranordnung nach einem der Ansprüche 1 bis 3, wobei das leitfähige, elastische Material (24) der dritten Schicht (16) ein Textil ist, das mit einem leitfähigen Additiv durchsetzt ist.

5. Sensoranordnung nach Anspruch 4, wobei das Additive ein kohlenstoffbasiertes Additiv oder ein metallisches Additiv ist.

6. Sensoranordnung nach Anspruch 4 oder 5, wobei das Textil ein Microfasertuch ist.

7. Sensoranordnung nach Anspruch 1, wobei die Naht (56) ausgebildet ist, die erste (12) und dritte Schicht (16) miteinander zu verbinden und sich entlang des nichtleitenden Bereichs (22) der ersten Schicht (12) zu erstrecken.

8. Sensoranordnung nach Anspruch 7, wobei die Naht (56) ferner dazu ausgebildet ist, die zweite Schicht (14) mit der ersten (12) und dritten Schicht (16) zu verbinden und sich entlang des nichtleitenden Bereichs (22) der ersten Schicht (12) und durch den dritten leitenden Bereich (30) der zweiten Schicht (14) zu erstrecken.

9. Sensoranordnung nach einem der Ansprüche 1 bis 8, wobei die erste und die zweite Schicht (12, 14) ein textiles Flächengebilde sind, in welches der erste, zweite und dritte leitende Bereich (20, 28, 30) mittels leitfähigen Garns eingewoben sind.

10. Sensoranordnung nach einem der Ansprüche 1 bis 9, wobei das leitfähige, elastische Material (24) einen Durchgangswiderstand aufweist, der so ausgebildet ist, dass er sich linear zu einer angelegten Spannung verhält, wenn sich die angelegte Spannung im Bereich von 0V bis 5V ändert.

11. Sensoranordnung nach einem der Ansprüche 1 bis 10, wobei das leitfähige, elastische Material (24) einen Temperaturänderungskoeffizienten zwischen 0,75 und 1,25 aufweist, und wobei der Temperaturänderungskoeffizient ein Faktor ist, der die maximale Stromänderung bei Erwärmung auf 70° Celsius und Abkühlung auf -20° Celsius beschreibt.

12. Sensoranordnung nach einem der Ansprüche 1 bis 11, wobei der dritte elektrisch leitende Bereich (30) der zweiten Schicht (14) den ersten und zweiten elektrischen Bereich (20, 28) sowie den elektrisch nichtleitenden Bereich (22) der ersten Schicht (12) überlappt und einen Bereich definiert, in dem die dritte Schicht (16) in Bezug zur ersten und zweiten Schicht (12, 14) eine ununterbrochene, geschlossene Oberfläche aufweist.

13. Sensoranordnung nach einem der Ansprüche 1 bis 12, wobei die Fixierung ferner so ausgebildet ist, dass die erste, zweite und dritte Schicht (12, 14, 16) im aktiven Bereich (36) unbelastet aufeinanderliegen und die einander zugewandten Oberflächen (48, 50) der ersten, zweiten und dritten Schicht (12, 14, 16) frei von einer Fixierung sind

14. Schutzeinrichtung (110, 112) mit einer Sensoranordnung nach einem der Ansprüche 1 bis 13.

## Claims

1. A sensor arrangement (10) comprising a first (12), a second (14) and a third (16) layer of flexible material, the third layer being located between the first and second layers, and the stacked layers forming a pressure sensitive sensor with at least two sensor cells,
the first layer (12) comprises a first (20) electrically conductive region and a second (28) electrically conductive region that extend in the surface, the first and second conductive regions being mechanically interconnected by a non-electrically conductive region (22), and the second layer (14) comprises a third (30) conductive region that extends in the surface,
wherein the third electrically conductive region (30) of the second layer (14) overlaps the first and second electrically conductive regions (20, 28) of the first layer (12), the region of overlap defining an active region (36) of a first and a second sensor cell, and
wherein the third layer (16) is formed of a conductive, elastic material (24) which, in the active region (36), interacts with the first and second conductive regions (20, 28) of the first layer (12) when pressurized locally, so that an electrical resistance (38) between the first, second and third electrical regions (20, 28, 30) changes at the location of the applied pressure,
**characterized in that** the sensor arrangement has a seam (56) which is configured to fix the first and second layers (12, 14) with respect to one another in a manner that the seam (56) is arranged outside the active region (36), the first and third layers (12, 16) lie on top of one another in the active region (36) without pressure, and the surfaces (48, 50) of the first and third layers (12, 16) facing one another are free from fixation.

2. A sensor arrangement (10) comprising a first (12), a second (14) and a third (16) layer of flexible material, the third layer being located between the first and second layers, and the stacked layers forming a pressure sensitive sensor with at least two sensor cells,
the first layer (12) comprises a first (20) electrically conductive region and a second (28) electrically conductive region that extend in the surface, the first and second conductive regions being mechanically interconnected by a non-electrically conductive region (22), and the second layer (14) comprises a third (30) conductive region that extends in the surface,
wherein the third electrically conductive region (30) of the second layer (14) overlaps the first and second electrically conductive regions (20, 28) of the first layer (12), the region of overlap defining an active region (36) of a first and a second sensor cell, and
wherein the third layer (16) is formed of a conductive, elastic material (24) which, in the active region (36), interacts with the first and second conductive regions (20, 28) of the first layer (12) when pressurized locally, so that an electrical resistance (38) between the first, second and third electrical regions (20, 28, 30) changes at the location of the applied pressure,
**characterized in that** the sensor arrangement comprises a lamination (60) with at least one piece of film covering a surface of the first layer (12) facing away from the third layer (16) and extending beyond the first, second and third layers (12, 14, 16), wherein the lamination (60) is arranged outside the active area (36) and is configured to fix the first and second layers (12, 14) relative to one another in a manner that the first and third layers (12, 16) lie on top of one another in the active area (36) without pressure and the surfaces (48, 50) of the first and third layers (12, 16) facing one another are free from fixation.

3. The sensor arrangement according to one of claims 1 or 2, wherein the first layer (12) is a textile fabric into which the first (20) and second conductive regions (28) are woven with conductive yarn.

4. The sensor arrangement according to any one of claims 1 to 3, wherein the conductive, elastic material (24) of the third layer (16) is a textile interspersed with a conductive additive.

5. The sensor arrangement according to claim 4, wherein the additive is a carbon-based additive or a metallic additive.

6. The sensor arrangement according to claim 4 or 5, wherein the textile is a microfibre cloth.

7. The sensor arrangement according to claim 1, wherein the seam (56) is configured to join the first (12) and third layers (16) together and extend along the non-conductive portion (22) of the first layer (12).

8. The sensor arrangement according to claim 7, wherein the seam (56) is further configured to connect the second layer (14) to the first (12) and third layers (16) and to extend along the non-conductive region (22) of the first layer (12) and through the third conductive region (30) of the second layer (14).

9. The sensor arrangement according to any one of claims 1 to 8, wherein the first and second layers (12, 14) are a textile fabric into which the first, second and third conductive regions (20, 28, 30) are woven with conductive yarn.

10. The sensor arrangement according to any one of claims 1 to 9, wherein the conductive elastic material (24) has a volume resistance adapted to be linear to an applied voltage when the applied voltage changes in the range of 0V to 5V.

11. The sensor arrangement according to any one of claims 1 to 10, wherein the conductive, elastic material (24) has a temperature change coefficient between 0.75 and 1.25, and wherein the temperature change coefficient is a factor which describes the maximum current change when heated to 70° Celsius and cooled to -20° Celsius.

12. The sensor arrangement according to one of claims 1 to 11, wherein the third electrically conductive region (30) of the second layer (14) overlaps the first and second electrical regions (20, 28) and the electrically non-conductive region (22) of the first layer (12) and defines a region in which the third layer (16) has an uninterrupted, closed surface relative to the first and second layers (12, 14).

13. The sensor arrangement according to one of claims 1 to 12, wherein the fixation is further configured such that the first, second and third layers (12, 14, 16) lie on top of each other in the active region (36) without being pressurized and the surfaces (48, 50) of the first, second and third layers (12, 14, 16) are facing each other free of a fixation.

14. Safety device (110, 112) with a sensor arrangement according to any one of claims 1 to 13.

## Revendications

1. Arrangement capteur (10) comprenant une première (12), une deuxième (14) et une troisième couche (16) en matériau flexible qui se trouve entre la première et la deuxième couche, lesquelles forment superposées un capteur sensible à la pression doté d'au moins deux cellules de capteur,
la première couche (12) comporte une première (20) et une deuxième (28) zone électriquement conductrice qui s'étendent en surface et qui sont reliées mécaniquement ensemble par le biais d'une zone électriquement non conductrice (22), et la deuxième couche (14) comporte une troisième (30) zone conductrice qui s'étend en surface,
la troisième zone électriquement conductrice (30) de la deuxième couche (14) chevauchant la première et la deuxième zone électriquement conductrice (20, 28) de la première couche (12) et la zone du chevauchement définissant une zone active (36) d'une première et d'une deuxième cellule de capteur, et
la troisième couche (16) étant formée d'un matériau (24) élastique conducteur qui, dans la zone active (36), coopère avec la première et la deuxième zone conductrice (20, 28) de la première couche (12) lors d'une sollicitation mécanique locale, de sorte qu'une résistance électrique (38) entre la première, la deuxième et la troisième zone électrique (20, 28, 30) change à l'endroit de la sollicitation de pression,
**caractérisé en ce que** l'arrangement capteur possède une couture (56) qui est configurée de telle sorte qu'elle immobilise la première et la deuxième couche (12, 14) l'une par rapport à l'autre, la couture (56) étant disposée en-dehors de la zone active (36) de sorte que la première et la troisième couche (12, 16) reposent sans contrainte l'une sur l'autre dans la zone active (36) et les surfaces (48, 50) se faisant mutuellement face de la première et de la troisième couche (12, 16) sont dépourvues d'une immobilisation.

2. Arrangement capteur (10) comprenant une première (12), une deuxième (14) et une troisième couche (16) en matériau flexible qui se trouve entre la première et la deuxième couche, lesquelles forment superposées un capteur sensible à la pression doté d'au moins deux cellules de capteur,
la première couche (12) comporte une première (20) et une deuxième (28) zone électriquement conductrice qui s'étendent en surface et qui sont reliées mécaniquement ensemble par le biais d'une zone électriquement non conductrice (22), et la deuxième couche (14) comporte une troisième (30) zone conductrice qui s'étend en surface,
la troisième zone électriquement conductrice (30) de la deuxième couche (14) chevauchant la première et la deuxième zone électriquement conductrice (20, 28) de la première couche (12) et la zone du chevauchement définissant une zone active (36) d'une première et d'une deuxième cellule de capteur, et
la troisième couche (16) étant formée d'un matériau (24) élastique conducteur qui, dans la zone active (36), coopère avec la première et la deuxième zone conductrice (20, 28) de la première couche (12) lors d'une sollicitation mécanique locale, de sorte qu'une résistance électrique (38) entre la première, la deuxième et la troisième zone électrique (20, 28, 30) change à l'endroit de la sollicitation de pression,
**caractérisé en ce que** l'arrangement capteur possède une stratification (60) comprenant au moins un morceau de film, lequel recouvre une surface de la première couche (12) à l'opposé de la troisième couche (16) et s'étend au-delà de la première, la deuxième et la troisième couche (12, 14, 16), la stratification (60) étant disposée en-dehors de la zone active (36) et configurée de telle sorte qu'elle immobilise la première et la deuxième couche (12, 14) l'une par rapport à l'autre, que la première et la troisième couche (12, 16) reposent sans contrainte l'une sur l'autre dans la zone active (36) et les surfaces (48, 50) se faisant mutuellement face de la première et de la troisième couche (12, 16) sont dépourvues d'une immobilisation.

3. Arrangement capteur selon l'une des revendications 1 et 2, la première couche (12) étant une structure de feuille textile dans laquelle la première (20) et la deuxième zone conductrice (28) sont entrelacées au moyen de fils conducteurs.

4. Arrangement capteur selon l'une des revendications 1 à 3, le matériau (24) élastique conducteur de la troisième couche (16) étant un textile qui est chargé avec un additif conducteur.

5. Arrangement capteur selon la revendication 4, l'additif étant un additif à base de carbone ou un additif métallique.

6. Arrangement capteur selon la revendication 4 ou 5, le textile étant un chiffon à microfibres.

7. Arrangement capteur selon la revendication 1, la couture (56) étant configurée pour relier l'une à l'autre la première (12) et la troisième couche (16) et pour s'étendre le long de la zone non conductrice (22) de la première couche (12).

8. Arrangement capteur selon la revendication 7, la couture (56) étant en outre configurée pour relier la deuxième couche (14) à la première (12) et la troisième couche (16) et pour s'étendre le long de la zone non conductrice (22) de la première couche (12) et à travers la troisième zone conductrice (30) de la deuxième couche (14).

9. Arrangement capteur selon l'une des revendications 1 à 8, la première et la deuxième couche (12, 14) étant une structure de feuille textile dans laquelle la première, la deuxième et la troisième zone conductrice (20, 28, 30) sont entrelacées au moyen de fils conducteurs.

10. Arrangement capteur selon l'une des revendications 1 à 9, le matériau élastique conducteur (24) possédant une résistance transversale qui est configurée de telle sorte qu'elle se comporte linéairement pour une tension appliquée lorsque la tension appliquée varie dans la plage de 0 V à 5 V.

11. Arrangement capteur selon l'une des revendications 1 à 10, le matériau élastique conducteur (24) possédant un coefficient de variation de température entre 0,75 et 1,25, et le coefficient de variation de température étant un facteur qui décrit la variation de courant maximale lors d'un réchauffement à 70 °Celsius et d'un refroidissement à - 20 °Celsius.

12. Arrangement capteur selon l'une des revendications 1 à 11, la troisième zone électriquement conductrice (30) de la deuxième couche (14) chevauchant la première et la deuxième zone électrique (20, 28) ainsi que la zone non électriquement conductrice (22) de la première couche (12) et définissant une zone dans laquelle la troisième couche (16) présente une surface ininterrompue fermée par rapport à la première et la deuxième couche (12, 14).

13. Arrangement capteur selon l'une des revendications 1 à 12, l'immobilisation étant en outre configurée de telle sorte que la première, la deuxième et la troisième couche (12, 14, 16) reposent sans contrainte les unes sur les autres dans la zone active (36) et les surfaces (48, 50) se faisant mutuellement face de la première, la deuxième et la troisième couche (12, 14, 16) sont dépourvues d'une immobilisation.

14. Dispositif de protection (110, 112) comprenant un arrangement capteur selon l'une des revendications 1 à 13.
